# FASCICULE DE BREVET EUROPEEN

(11) **EP 3 258 380 B1**
(45) Date de publication et mention de la délivrance du brevet: **09.08.2023**
(21) Numéro de dépôt: 17175499.7
(22) Date de dépôt: 12.06.2017
(51) Int. Cl.: G06F 1/32, H04W 52/02, G06F 11/36, G06F 1/3206, G06F 1/3234, G06F 1/329

(54) **COEUR DE PROCESSEUR ASYNCHRONE ET MICROCONTRÔLEUR DE NOEUD DE CAPTEUR COMMUNICANT COMPORTANT UN TEL COEUR DE PROCESSEUR**
ASYNCHRONER PROZESSORKERN UND MIKROCONTROLLER EINES KOMMUNIZIERENDEN SENSORKNOTENS, DER EINEN SOLCHEN PROZESSORKERN UMFASST
ASYNCHRONOUS PROCESSOR CORE AND COMMUNICATING SENSOR NODE MICROCONTROLLER COMPRISING SUCH A PROCESSOR CORE

(30) Priorité: 14.06.2016 FR 1655465
(43) Date de publication de la demande: 20.12.2017
(73) Titulaire: COMMISSARIAT À L'ÉNERGIE ATOMIQUE ET AUX ÉNERGIES ALTERNATIVES, 75015 Paris (FR)
(72) Inventeur: BERTHIER, Florent, 94370 Sucy-en-Brie (FR); BEIGNE, Edith, 38112 Meaudre (FR); DEBICKI, Olivier, 38660 Saint Vincent de Mercuze (FR); HEITZMANN, Frédéric, 38240 Meylan (FR); SENTIEYS, Olivier, 22700 Perros-Guirec (FR); CHRISTMANN Jean-Frédéric, 38420 Revel (FR)
(74) Mandataire: Bonnet, Michel

(56) Documents cités:
- GB-A- 2 217 064
- US-A- 5 621 886
- US-A1- 2006 075 210
- US-A1- 2008 016 374

## Description

La présente invention concerne un coeur de processeur asynchrone et un microcontrôleur pour noeud de capteur communicant comportant un tel coeur de processeur.

Elle s'applique plus particulièrement à un coeur de processeur asynchrone, activable pour l'exécution séquentielle d'instructions sur réception de signaux de commande d'interruption, comportant :
- une unité de chargement séquentiel de lignes d'instructions depuis une mémoire principale externe au coeur de processeur,
- un décodeur de lignes d'instructions chargées par l'unité de chargement en instructions exécutables, et
- des unités fonctionnelles d'exécution des instructions exécutables.

Les circuits asynchrones ne sont pas cadencés par un signal d'horloge et fonctionnent selon un principe de traitements de données par requêtes et acquittements. Bien qu'étant apparus en même temps que les circuits synchrones, ils ne se sont pas développés dans les mêmes proportions et restent encore aujourd'hui d'utilisation très minoritaire. Ils ont pourtant des atouts importants tels qu'une consommation d'énergie nettement plus faible que les circuits synchrones, un potentiel de rapidité d'exécution des calculs plus élevé, un temps de réveil bien plus court (i.e. : inutile d'attendre qu'une horloge se stabilise) et une robustesse reconnue aux variations de tension (très utile lorsque l'énergie fournie au système n'est pas stable au court du temps). Ils sont ainsi particulièrement bien adaptés à des applications telles que les noeuds de réseaux de capteurs communicants sans fil de type WSN (de l'anglais « Wireless Sensor Network ») ou l'Internet des objets loT (de l'anglais « Internet of Things »).

Un exemple d'intégration d'un processeur asynchrone, à un ou plusieurs coeurs, dans un microcontrôleur pour noeud de capteur communicant sans fil est décrit dans l'article de Berthier et al, intitulé « Power gain estimation of an event-driven wake-up controller dedicated to WSN's microconroller », publié en pages 1-4 des Proceedings de la 13e conférence internationale NEWCAS (« New Circuits and Systems ») qui s'est tenue à Grenoble (FR) du 7 au 10 juin 2015. Bien qu'un tel processeur asynchrone présente effectivement les avantages précités, il reste délicat à concevoir car son exécution de routines d'interruption n'est pas simple à suivre pour un programmeur. En particulier, toute action de débogage est rendue difficile. Notamment, il n'est pas prévu d'unité de débogage sur puce.

Or dans le domaine des réseaux WSN ou de l'IoT, la fonction de débogage sur puce est essentielle pour permettre à un programmeur d'aller lire et écrire des données sur tout l'espace d'adressage d'un microcontrôleur, de stopper l'exécution d'un programme d'ordinateur ou encore de faire du pas à pas sur un code d'instructions alors que celui-ci s'exécute sur le processeur du microcontrôleur. Cette fonction est répandue dans les circuits synchrones, mais difficile à mettre en oeuvre dans les circuits asynchrones et c'est un véritable frein à leur développement.

Un exemple en technologie asynchrone est néanmoins évoqué dans l'article de Liang et al, intitulé « On-chip debug for an asynchronous Java accelerator », publié en pages 312-315 des Proceedings de la 6e conférence internationale PDCAT (« Parallel and Distributed Computing Applications and Technologies ») qui s'est tenue à Dalian (CN) du 5 au 8 décembre 2005. Il s'agit d'un accélérateur Java asynchrone associé à une unité de débogage ICE. Mais dans cet article, l'unité de débogage ICE est implémentée en technologie synchrone et la gestion ainsi que l'utilisation par l'accélérateur Java des différents signaux (D_req, R_req, E_req, M_req, W_req, ICE_req) échangés avec l'unité ICE ne sont pas clairement décrites dans la logique asynchrone, cette dernière n'étant pas non plus détaillée. Par ailleurs, l'implémentation des fonctions de débogage de l'unité ICE est matérielle ce qui apporte une certaine complexité et une rigidité à l'architecture globale.

US 2006/075210 A1 porte sur un coeur de processeur asynchrone, activable pour l'exécution séquentielle d'instructions sur réception de signaux de commande d'interruption.

Il peut ainsi être souhaité de prévoir un coeur de processeur asynchrone qui permette de s'affranchir d'au moins une partie des problèmes et contraintes précités.

Il est donc proposé un coeur de processeur asynchrone, activable pour l'exécution séquentielle d'instructions sur réception de signaux de commande d'interruption, comportant :
- une unité de chargement séquentiel de lignes d'instructions depuis une mémoire principale externe au coeur de processeur,
- un décodeur de lignes d'instructions chargées par l'unité de chargement en instructions exécutables,
- des unités fonctionnelles d'exécution des instructions exécutables, et
- un module de contrôle d'exécution configuré en automate à deux états :
   - un état de sommeil dans lequel le coeur de processeur asynchrone est en attente d'un signal de commande d'interruption pour l'exécution d'une routine d'interruption, et
   - un état d'exécution dans lequel le décodeur est en attente d'une nouvelle ligne d'instruction de routine d'interruption à décoder,

le module de contrôle d'exécution gérant en outre une variable d'état de l'unité de chargement pour sélectivement autoriser ou empêcher, en fonction au moins de la valeur de cette variable d'état, le chargement d'une nouvelle ligne d'instruction par l'unité de chargement.

Ainsi, la logique asynchrone définie par cette configuration spécifique du module de contrôle d'exécution du coeur de processeur asynchrone permet d'intervenir simplement dans l'exécution des routines d'interruption. Il est notamment possible grâce à une telle logique asynchrone de contrôler le chargement séquentiel des lignes d'instructions à exécuter et par conséquent de faire du pas à pas sur l'exécution d'une routine d'interruption ou de la suspendre pour ensuite la reprendre à volonté. On peut ainsi envisager une fonction de débogage sur puce pouvant être implémentée de façon transparente pour un programmeur, c'est-à-dire indépendante du caractère asynchrone du coeur de processeur. De plus la logique asynchrone proposée présente un coût matériel très faible, pouvant se limiter à un automate à deux états gérant en outre une variable d'état de l'unité de chargement.

De façon optionnelle, le module de contrôle d'exécution est configuré pour :
- passer à l'état d'exécution sur réception, par le coeur de processeur, d'un signal de commande d'interruption pour l'exécution d'une routine d'interruption, et autoriser le chargement d'une première ligne d'instruction de cette routine d'interruption à cette occasion, et
- passer de l'état d'exécution à l'état de sommeil après réception, par le coeur de processeur, d'une dernière ligne d'instruction de routine d'interruption.

De façon optionnelle également, le module de contrôle d'exécution est configuré pour, sur réception d'une nouvelle ligne d'instruction chargée depuis la mémoire principale externe lorsqu'il est dans l'état d'exécution :
- déterminer s'il s'agit d'une ligne d'instruction requérant une suspension de routine d'interruption, puis
- s'il s'agit d'une ligne d'instruction requérant une suspension de routine d'interruption, empêcher le chargement d'une nouvelle ligne d'instruction depuis la mémoire principale externe, ou
- sinon, sélectivement autoriser ou empêcher le chargement d'une nouvelle ligne d'instruction depuis la mémoire principale externe en fonction uniquement de la valeur de la variable d'état de l'unité de chargement.

De façon optionnelle également, l'état de sommeil ou d'exécution ainsi que la valeur de la variable d'état de l'unité de chargement pour autoriser ou empêcher le chargement d'une nouvelle ligne d'instruction sont des données d'informations stockées dans des registres d'états respectifs du coeur de processeur auxquels le module de contrôle d'exécution a accès en lecture et/ou en écriture.

De façon optionnelle également, un coeur de processeur asynchrone selon l'invention peut inclure des moyens de réception et de stockage de consignes de débogage.

De façon optionnelle également, les moyens de réception et de stockage incluent des registres de commande accessibles en lecture par le module de contrôle d'exécution et prévus pour l'enregistrement, par une unité de débogage extérieure au coeur de processeur ayant accès en écriture à ces registres de commandes, des consignes de débogage.

De façon optionnelle également, les consignes de débogage comportent :
- une consigne de suspension de routine d'interruption en cours d'exécution,
- une consigne de redémarrage de routine d'interruption suspendue,
- une consigne d'exécution d'une seule ligne d'instruction de routine
   d'interruption,
   et le module de contrôle d'exécution est configuré pour, sur prise en compte de chaque consigne de débogage :
- mettre à jour la valeur de la variable d'état de l'unité de chargement pour empêcher le chargement d'une nouvelle ligne d'instruction lorsqu'il s'agit d'une consigne de suspension de routine d'interruption,
- autoriser le chargement d'une nouvelle ligne d'instruction et mettre à jour la valeur de la variable d'état de l'unité de chargement pour autoriser le chargement d'une nouvelle ligne d'instruction suivante lorsqu'il s'agit d'une consigne de redémarrage de routine d'interruption,
- autoriser le chargement d'une nouvelle ligne d'instruction lorsqu'il s'agit d'une consigne d'exécution d'une seule ligne d'instruction de routine d'interruption.

Il est également proposé un microcontrôleur pour noeud de capteur communicant, présentant une architecture comprenant :
- une première partie comportant un processeur de réveil activable sur réception de signaux de commande d'interruption,
- une deuxième partie comportant un processeur principal activable
   uniquement sur sollicitation du processeur de réveil,
   dans lequel :
- le processeur de réveil comporte au moins un coeur de processeur asynchrone selon l'invention, incluant des unités fonctionnelles adaptées pour des échanges de données entre le microcontrôleur et au moins un périphérique, pour une gestion d'un protocole de réveil, ainsi que pour une gestion de fréquences et puissances de fonctionnement de composants de noeud de capteur communicant, et
- le processeur principal comporte des unités fonctionnelles supplémentaires d'exécution de calculs complexes non réalisés par le processeur de réveil.

De façon optionnelle, un microcontrôleur selon l'invention peut comporter une unité de débogage dans sa première partie, cette unité de débogage ayant accès au processeur de réveil, via un bus asynchrone de transmission de données, pour l'envoi de consignes de débogage.

De façon optionnelle, un microcontrôleur selon l'invention peut comporter une mémoire principale dans sa première partie, cette mémoire principale comportant des lignes d'instructions d'au moins une routine d'interruption et étant accessible par le processeur de réveil, via un bus asynchrone de transmission de données, pour le chargement séquentiel de lignes d'instructions.

La présente invention est définie par les revendications indépendantes ci-jointes.

L'invention sera mieux comprise à l'aide de la description qui va suivre, donnée uniquement à titre d'exemple et faite en se référant aux dessins annexés dans lesquels :
- la figure 1 représente schématiquement la structure générale d'un exemple de microcontrôleur pouvant comporter un coeur de processeur asynchrone selon l'invention,
- la figure 2 représente schématiquement la structure générale d'une partie toujours réactive du microcontrôleur de la figure 1 incluant un coeur de processeur asynchrone selon un mode de réalisation de l'invention, et
- la figure 3 illustre partiellement une variante de réalisation du coeur de processeur asynchrone de la figure 2.

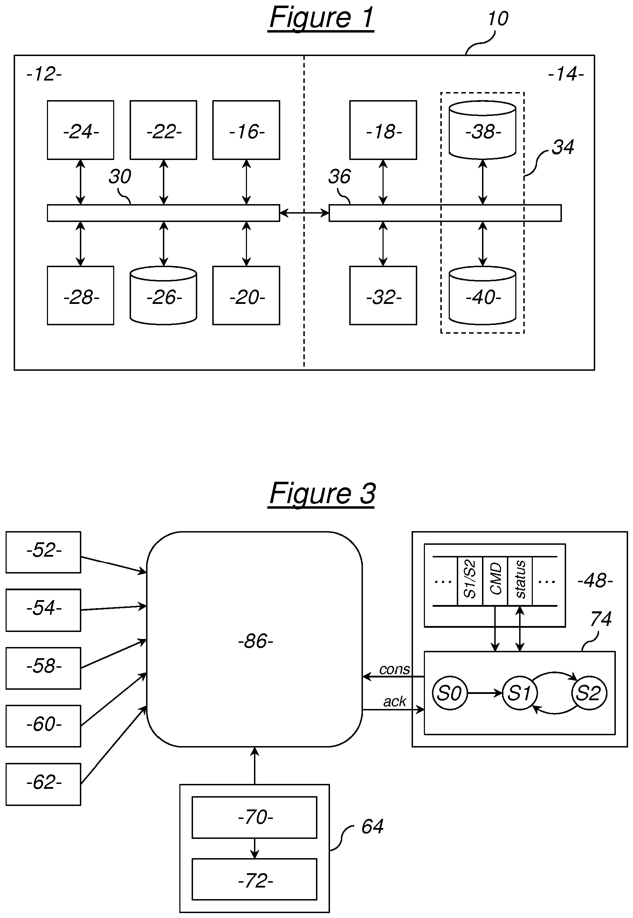

Le microcontrôleur 10 illustré sur la figure 1 convient pour un noeud de capteur communicant, c'est-à-dire l'un quelconque des noeuds d'un réseau WSN de capteurs communicants sans fil. Il présente une architecture en deux parties 12, 14, comme enseigné dans l'article de Berthier et al précité. La première partie 12, toujours réactive, comporte un processeur de réveil 16 activable sur réception de signaux de commande d'interruption. La deuxième partie 14, réactive sur demande, comporte un processeur principal 18 activable uniquement sur sollicitation du processeur de réveil 16.

Plus précisément, le processeur de réveil 16 comporte au moins un coeur de processeur asynchrone conforme à l'invention, par exemple implémenté avec de la logique QDI (de l'anglais « Quasi Delay Insensitive). Par ailleurs, la première partie 12 comporte en outre :
- un module général 20 d'interface avec des périphériques, apte à recevoir des signaux variés (alertes, signaux d'horloges ou temporisateurs, événements, ...) provenant de différents périphériques,
- une unité 22 de génération de signaux de commande d'interruption, connectée au module général d'interface 20 pour recevoir ses différents signaux, et au processeur de réveil 16 pour lui adresser des signaux de commande d'interruption,
- une unité 24 de gestion d'énergie, apte à gérer les ressources en énergie permettant au microcontrôleur 10 de fonctionner et connectée à l'unité 22 de génération de signaux de commande d'interruption pour pouvoir être activée lorsqu'un signal de commande d'interruption doit être adressé au processeur de réveil 16,
- une mémoire principale 26 externe au processeur de réveil 16,
- une unité de débogage 28, et
- un bus asynchrone 30 de transmission de données, auquel chacun des six éléments 16, 20, 22, 24, 26 et 28 est connecté.

Dans la deuxième partie 14, le processeur principal 18 est synchrone. Par ailleurs, cette deuxième partie 14 comporte un autre module général 32 d'interface avec des périphériques, une autre mémoire principale 34 externe au processeur principal 18 et un bus 36 de transmission de données AHB (de l'anglais « Advanced High-performance Bus »). La mémoire principale 34 est illustrée sur la figure 1 comme subdivisée en deux mémoires distinctes 38 et 40, l'une pour le stockage d'instructions de programmes d'ordinateurs, l'autre pour le stockage de données de traitement. Mais il peut aussi s'agir d'une seule et même mémoire.

Les deux bus 30 et 36 sont interconnectés ou peuvent constituer un seul et même bus de transmission de données.

L'avantage d'une telle architecture en deux parties, l'une toujours réactive à processeur asynchrone et l'autre réactive sur demande (de la partie toujours réactive) à processeur synchrone, est de profiter des avantages du processeur asynchrone 16 en termes de consommation énergétique, temps de réveil et robustesse aux variations de tension pour la partie du microcontrôleur qui doit rester tout le temps réactive, et de ceux du processeur synchrone 18 en termes de puissance de calcul pour la partie moins sollicitée. Ainsi, le processeur de réveil asynchrone 16 est avantageusement doté d'unités fonctionnelles à capacités limitées, par exemple pour des échanges de données entre le microcontrôleur 10 et au moins un périphérique, pour une gestion d'un protocole de réveil et pour une gestion de fréquences et puissances de fonctionnement de composants du noeud de capteur communicant considéré. Au contraire, le processeur principal synchrone 18 est doté d'unités fonctionnelles supplémentaires à capacités étendues, par exemple pour l'exécution de calculs complexes non réalisés par le processeur de réveil 16.

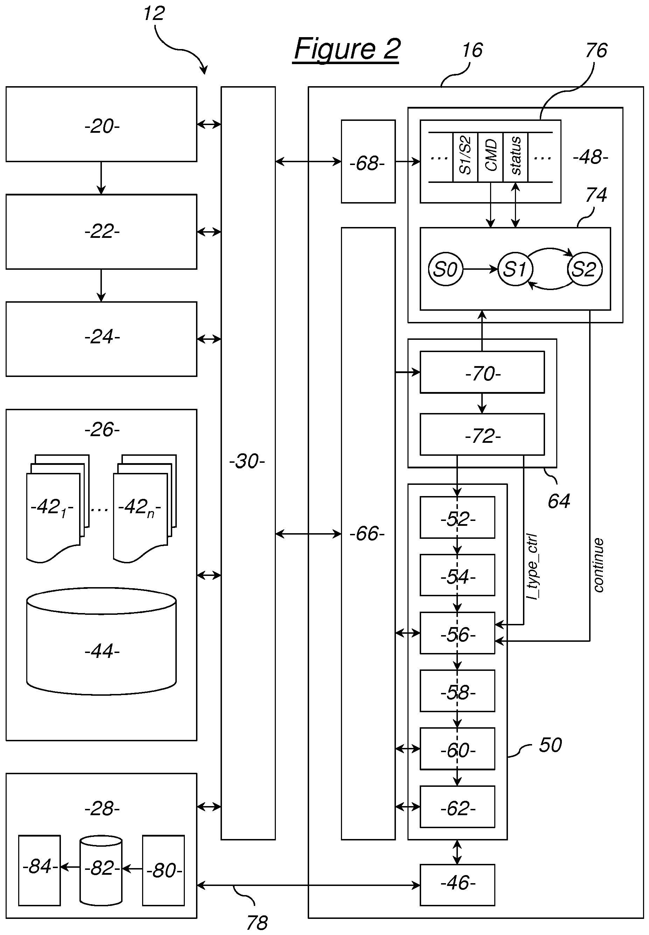

La figure 2 illustre la première partie 12 toujours réactive avec davantage de détails que dans la figure 1, notamment en ce qui concerne le processeur de réveil 16 constitué dans cet exemple d'un unique coeur de processeur asynchrone conforme à l'invention.

La mémoire principale 26 est également détaillée. Elle comporte des routines d'interruption 42₁, ..., 42ₙ, chacune de ces routines étant constituée de lignes d'instructions logicielles. Elle comporte en outre de l'espace de stockage 44 pour des données de traitement (données traitées ou à traiter logiciellement).

Le processeur de réveil 16 fonctionne de manière asynchrone. En d'autres termes, il est configuré pour exécuter l'une quelconque des routines d'interruption 42₁, ..., 42ₙ, sur réception d'un signal de commande d'interruption correspondant adressé par l'unité de génération 22. La transmission des signaux de commande d'interruption ne se fait pas nécessairement via le bus asynchrone 30. Il peut avantageusement être prévu une connexion spécifique (non illustrée sur la figure 2) entre l'unité de génération 22 et le processeur de réveil 16. Chaque signal de commande d'interruption identifie clairement une routine d'interruption.

Pour remplir ses fonctions, le processeur de réveil 16 est configuré de manière à comporter :
- un ensemble 46 de registres généraux,
- un module 48 de contrôle d'exécution de routines d'interruption,
- un ensemble 50 d'unités fonctionnelles, parmi lesquelles :
   - une unité arithmétique et logique 52,
   - une unité de branchement 54,
   - une unité 56 de chargement séquentiel de lignes d'instructions depuis la mémoire principale 26,
   - une unité 58 de déplacement de données en registre,
   - une unité 60 d'appel à des fonctions prédéfinies, et
   - une unité 62 d'échange de données entre la mémoire principale 26 et les registres généraux 46 du processeur de réveil 16,
- un décodeur 64 de lignes d'instructions chargées par l'unité de chargement 56 en instructions exécutables,
- une interface maître 66, et
- une interface esclave 68.

On notera que parmi les unités fonctionnelles de l'ensemble 50, les unités 52, 54, 58, 60, 62 sont des unités fonctionnelles d'exécution des instructions exécutables fournies par le décodeur 64 après décodage des lignes d'instructions chargées par l'unité de chargement 56.

De façon connue en soi, le décodeur 64 est par exemple configuré en deux modules fonctionnels distincts : un pré-décodeur 70 et un module de décodage 72. Le pré-décodeur 70 est conçu pour recevoir séquentiellement des lignes d'instructions dont le chargement a été préalablement requis par l'unité de chargement 56 et pour en informer le module 48 de contrôle d'exécution selon des modalités qui seront détaillées ci-après. Chaque ligne d'instruction reçue par le pré-décodeur 70 est ensuite transmise au module de décodage 72 pour être traduite en instruction exécutable par les unités fonctionnelles de l'ensemble 50. Pour ce faire, le module de décodage 72 transmet une série de signaux de commandes correspondants, via des lignes de transmissions dédiées, aux unités fonctionnelles de l'ensemble 50 et à l'ensemble 46 de registres généraux de manière à les coordonner pour exécuter précisément l'instruction exécutable décodée.

Conformément à l'invention, le module 48 de contrôle d'exécution est configuré en automate 74 à deux états :
- un état S1 de sommeil dans lequel le processeur de réveil 16 est en attente d'un signal de commande d'interruption pour l'exécution d'une routine d'interruption, et
- un état S2 d'exécution dans lequel le décodeur 64 est en attente d'une nouvelle ligne d'instruction de routine d'interruption en cours d'exécution à décoder.

Il existe aussi de façon optionnelle et conventionnelle un état S0 d'initialisation, instable et menant automatiquement à l'état de sommeil S1 après une phase d'initialisation.

Les deux états S1 et S2 sont au contraire stables. L'automate à deux états 74 du module 48 de contrôle d'exécution est configuré pour passer de l'un à l'autre selon les règles suivantes :
- on passe de l'état de sommeil S1 à l'état d'exécution S2 sur réception, par le processeur de réveil 16, d'un signal de commande d'interruption pour l'exécution d'une routine d'interruption, et
- on passe de l'état d'exécution S2 à l'état de sommeil S1 après réception, par le processeur de réveil 16, d'une dernière ligne d'instruction de routine d'interruption.

Lors du passage de l'état S1 à S2, le module 48 de contrôle d'exécution est configuré pour autoriser à cette occasion le chargement d'une première ligne d'instruction de la routine d'interruption identifiée dans le signal de commande d'interruption. Cette fonction d'autorisation est implémentée sous la forme d'un signal spécifique « continue » adressé par le module 48 de contrôle d'exécution à l'unité de chargement 56, sachant que cette dernière est configurée pour ne pas requérir le chargement d'une nouvelle ligne d'instruction de routine d'exécution (y compris la première) tant qu'un signal « continue » n'a pas été émis par le module 48. Le signal « continue » est par exemple de type « Single Rail », c'est-à-dire à un fil de signal et un fil d'acquittement.

Lorsqu'il est dans son état d'exécution et qu'il reste encore au moins une nouvelle ligne d'instruction de routine d'interruption en cours d'exécution à charger, le module 48 de contrôle d'exécution gère en outre une variable d'état « status » de l'unité de chargement 56 pour sélectivement autoriser ou empêcher, en fonction au moins de la valeur de cette variable d'état, le chargement d'une nouvelle ligne d'instruction par l'unité de chargement 56. La valeur est par exemple binaire : « run » lorsque le chargement d'une nouvelle ligne d'instruction par l'unité de chargement 56 est autorisé, « stop » lorsque le chargement d'une nouvelle ligne d'instruction par l'unité de chargement 56 doit être empêché. Le principe de fonctionnement de l'automate à deux états 74 du module 48 peut alors être de consulter la valeur de cette variable d'état « status » avant de décider l'envoi ou non d'un signal « continue » pour le chargement ou pas d'une nouvelle ligne d'instruction.

Concrètement, les deux états S1, S2 et la variable d'état « status » peuvent être conservés en mémoire et mis à jour dans un ensemble 76 de registres de commande et d'état du module 48 de contrôle d'exécution.

En termes d'échanges de données entre les éléments du processeur de réveil 16 et les autres composants de la première partie 12 toujours réactive du microcontrôleur 10, l'unité de chargement 56 est prévue pour échanger des adresses de lignes d'instructions avec la mémoire principale 26 via l'interface maître 66 et le bus asynchrone 30. Les unités fonctionnelles 60 et 62, respectivement d'appel à des fonctions prédéfinies et d'échange de données entre la mémoire principale 26 et les registres généraux 46, sont prévues pour échanger des adresses de données de traitement ou des données elles-mêmes avec la mémoire principale 26 via l'interface maître 66 et le bus asynchrone 30. Le pré-décodeur 70 est prévu pour recevoir séquentiellement des lignes d'instructions en provenance de la mémoire principale 26 via l'interface maître 66 et le bus asynchrone 30. L'automate à deux états 74 est prévu pour échanger des signaux avec l'unité 22 de génération de signaux de commande d'interruption via des connexions dédiées sans solliciter le bus asynchrone 30. Enfin, l'ensemble 76 de registres de commande et d'état est prévu pour recevoir des signaux ou consignes à enregistrer via l'interface esclave 68 et le bus asynchrone 30.

A l'état de sommeil S1, le processeur de réveil 16 est en attente d'un signal de commande d'interruption pour l'exécution d'une routine d'interruption. Plus précisément, c'est l'automate à deux états 74 qui est dans l'attente d'un signal de commande d'interruption en provenance de l'unité de génération 22. Cela se produit lorsque le module général d'interface 20 fournit des signaux dont la réception par l'unité de génération 22 provoque l'activation d'une routine d'interruption. Pour ce faire, l'unité de génération 22 peut être configurée elle-même en automate fini selon lequel chaque routine d'interruption stockée en mémoire principale 26 est activée selon une combinaison prédéterminée qui lui est spécifique d'au moins une partie des signaux fournis par le module général d'interface 20. L'activation d'une routine d'interruption provoque l'activation de l'unité 24 de gestion d'énergie et la génération d'un signal de commande d'interruption correspondant.

Lorsque l'automate à deux états 74 reçoit un signal de commande d'interruption, cela provoque l'extraction, à partir de ce signal de commande, d'un vecteur d'interruption comportant une adresse indiquant, directement ou indirectement, l'emplacement de la première ligne d'instruction de la routine d'interruption considérée dans la mémoire principale 26. Cela provoque également un passage de l'état de sommeil S1 à l'état d'exécution S2 et l'envoi d'un signal « continue » ainsi que du vecteur d'interruption à l'unité de chargement 56.

Sur réception du signal « continue » et du vecteur d'interruption, l'unité de chargement 56 charge l'adresse contenue dans le vecteur d'interruption et envoie une requête de chargement de la première ligne d'instruction à la mémoire principale 26. Cette première ligne d'instruction est reçue par le pré-décodeur 70.

Si cette première ligne d'instruction est décodable en une instruction exécutable par les unités fonctionnelles de l'ensemble 50 et si la routine d'interruption considérée comporte plus d'une ligne d'instruction, alors le pré-décodeur 70 envoie un signal de demande d'instruction suivante à l'automate à deux états 74 et transmet la ligne d'instruction au module de décodage 72. Le module de décodage 72 transforme la ligne d'instruction en instruction à exécuter par les unités fonctionnelles et permet notamment le chargement de la ligne d'instruction suivante de la routine d'interruption considérée en transmettant à l'unité de chargement 56 un signal « I_type_ctrl » comportant une information lui permettant de retrouver, directement ou indirectement, l'emplacement de cette ligne d'instruction suivante dans la mémoire principale 26. Parallèlement, lorsque l'automate à deux états 74 reçoit le signal de demande d'instruction suivante de la part du pré-décodeur 70, il consulte la valeur de la variable d'état « status ». Si cette valeur est à « run », alors il envoie un signal « continue » à l'unité de chargement 56 de sorte qu'il autorise le chargement d'une nouvelle ligne d'instruction par l'unité de chargement 56. Sinon, il n'envoie rien de sorte qu'il empêche le chargement d'une nouvelle ligne d'instruction par l'unité de chargement 56. C'est seulement à réception des deux signaux « I_type_ctrl » et « continue » que l'unité de chargement 56 charge l'adresse indiquée par le signal « I_type_ctrl » et envoie une requête de chargement de la ligne d'instruction suivante à la mémoire principale 26.

Si la première ligne d'instruction est aussi la dernière ligne d'instruction de la routine d'interruption considérée, alors le pré-décodeur 70 envoie un signal de fin de routine d'interruption à l'automate à deux états 74 et transmet la ligne d'instruction au module de décodage 72 si elle est décodable en une instruction exécutable par les unités fonctionnelles de l'ensemble 50. Le module de décodage 72 transforme alors la ligne d'instruction en instruction à exécuter par les unités fonctionnelles. Parallèlement, lorsque l'automate à deux états 74 reçoit le signal de fin de routine d'interruption de la part du pré-décodeur 70, cela provoque un passage de l'état d'exécution S2 à l'état de sommeil S1 et l'envoi, après exécution de la dernière instruction, d'une information de fin d'exécution à l'unité 22 de génération de signaux de commande d'interruption. Cette dernière peut alors envoyer l'information à l'unité 24 de gestion d'énergie pour qu'elle s'adapte en conséquence.

Le fonctionnement détaillé dans les deux paragraphes précédents se répète à chaque réception d'une nouvelle ligne d'instruction par le pré-décodeur 70 jusqu'à la fin d'exécution de la routine d'interruption considérée.

En particulier, on notera que l'unité de chargement 56 n'est autorisée à procéder au chargement d'une nouvelle ligne d'instruction que sur réception du signal « continue » et du vecteur d'interruption pour le chargement de la première ligne d'instruction, ou du signal « continue » et du signal « I_type_ctrl » pour le chargement de toute autre ligne d'instruction. Il ne peut donc pas y avoir de chargement de nouvelle ligne d'instruction tant que le signal « continue » n'est pas envoyé par le module 48 de contrôle d'exécution. Ce rendez-vous entre deux signaux peut être implémenté sous la forme de portes C de Muller (de l'anglais « Muller C-gate ») dans l'unité de chargement 56 (c'est l'exemple illustré en figure 2), le décodeur 64, le module 48 de contrôle d'exécution ou autre.

Etant donné que l'envoi du signal « continue » par le module 48 de contrôle d'exécution est soumis à conditions, notamment au moins à la réception d'un signal de commande d'interruption ou à la valeur « run » de la variable d'état « status » comme cela a été vu précédemment, il est clair que cette implémentation combinée à la configuration spécifique en automate à deux états 74 du module 48 de contrôle d'exécution induit un fonctionnement du processeur de réveil 16 tel que son exécution est aisément maîtrisable par un programmeur. Elle permet en particulier d'intervenir simplement dans l'exécution des routines d'interruption en contrôlant le chargement séquentiel des lignes d'instructions à exécuter et par conséquent de faire du pas à pas sur l'exécution d'une routine d'interruption ou de la suspendre pour ensuite la reprendre à volonté.

On peut aussi avantageusement envisager une fonction optionnelle de débogage sur puce comme cela va maintenant être détaillé.

Conformément à cette fonction de débogage, il est tout d'abord prévu qu'un programmeur puisse remplacer une ou plusieurs lignes d'instructions, décodables en instructions exécutables par les unités fonctionnelles de l'ensemble 50, de l'une ou plusieurs des routines d'interruption 42₁, ..., 42ₙ par respectivement une ou plusieurs lignes d'instructions requérant une suspension de routine d'interruption. Un formalisme spécifique est par exemple prévu pour identifier ce type de ligne d'instruction.

Ainsi, chaque fois que le pré-décodeur 70 reçoit une nouvelle ligne d'instruction requérant une suspension de routine d'interruption, elle est identifiée comme n'étant pas décodable en une instruction exécutable par les unités fonctionnelles de l'ensemble 50, de sorte que le pré-décodeur 70 ne la transmet pas au module de décodage 72. En revanche, il envoie un signal de demande de suspension de routine d'interruption à l'automate à deux états 74, à réception duquel ce dernier est configuré pour ne pas envoyer de signal « continue » et affecter la valeur « stop » à la variable d'état « status ». Cela a pour effet d'empêcher le chargement d'une nouvelle ligne d'instruction depuis la mémoire principale 26 quelle que soit la valeur de la variable d'état « status » avant réception de ce signal de demande de suspension de routine d'interruption. Il envoie également un signal « I_type_ctrl » à l'unité de chargement spécifiant de se préparer à charger la même ligne d'instruction.

Il est de cette façon très facile pour un programmeur de poser autant de suspensions de routine d'interruption que souhaité dans ses lignes d'instructions.

Conformément à la fonction de débogage, un programmeur peut en outre interagir avec l'unité de débogage pour transmettre des consignes de débogage pendant que le processeur de réveil 16 est dans son état d'exécution S2. Le processeur de réveil 16 comporte pour cela des moyens de réception et de stockage de ces consignes de débogage, implémentés sous la forme de registres de commande « CMD ». Ces registres sont par exemple inclus dans l'ensemble 76 de registres de commande et d'état du module 48. Ils sont accessibles en lecture par l'automate à deux états 74 du module 48 de contrôle d'exécution et en écriture, via le bus asynchrone 30 et l'interface esclave 68, par l'unité de débogage 28.

Les consignes de débogage qui peuvent ainsi être transmises par l'unité de débogage 28 à l'automate à deux états 74 comportent au moins :
- une consigne « C-stop » de suspension de routine d'interruption en cours d'exécution,
- une consigne « C-run » de redémarrage de routine d'interruption suspendue,
- une consigne « C-step » d'exécution d'une seule ligne d'instruction de routine d'interruption.

En conséquence, l'automate à deux états 74 du module 48 de contrôle d'exécution est configuré pour :
- sur prise en compte d'une consigne « C-stop » lue en registre « CMD », affecter la valeur « stop » à la variable d'état « status » et ne pas envoyer de signal « continue » à l'unité de chargement 56, ce qui provoque une suspension de la routine d'interruption,
- sur prise en compte d'une consigne « C-run » lue en registre « CMD », affecter la valeur « run » à la variable d'état « status » et envoyer un signal « continue » à l'unité de chargement 56, ce qui provoque une reprise de la routine d'interruption, et
- sur prise en compte d'une consigne « C-step » lue en registre « CMD », envoyer un signal « continue » à l'unité de chargement 56 sans modifier la valeur de la variable d'état « status », ce qui provoque l'exécution d'une seule ligne d'instruction de la routine d'interruption.

Il est de cette façon très facile pour un programmeur d'utiliser les outils bien connus de débogage sur puce dans un contexte de processeur asynchrone et sans que ce contexte asynchrone ne soit perturbant.

En ce qui concerne plus précisément les lignes d'instructions requérant une suspension de routine d'interruption, lorsqu'une routine d'interruption est suspendue suite au chargement d'une telle ligne d'instruction, le programmeur doit de façon connue en soi remplacer dans la mémoire principale 26 la ligne d'instructions requérant la suspension par la ligne d'instruction décodable en instruction exécutable qu'elle remplaçait pour ensuite relancer la routine d'interruption considérée par une consigne « C-run » ou C-step ». De cette façon, la routine d'interruption reprend son exécution à l'endroit de la ligne d'instruction qui avait requis la suspension.

Les instructions de suspensions et consignes de débogages évoquées précédemment constituent des outils invasifs de mode de débogage en premier plan FGDM (de l'anglais « ForeGround Debug Mode »).

Conformément à la fonction de débogage, il est en outre possible de compléter les outils FGDM par des outils non invasifs de mode de débogage en arrière-plan BGDM (de l'anglais « BackGround Debug Mode »).

Ces outils BGDM comportent par exemple :
- des modules de duplication asynchrones (non illustrés sur la figure 2), placés en sorties de l'interface maître 66, de l'unité de chargement 56, de l'unité 60 d'appel à des fonctions prédéfinies et de l'unité 62 d'échange de données,
- une connexion spécifique 78 entre l'unité de débogage 28 et l'ensemble 46 des registres généraux du processeur de réveil 16,
- un module de surveillance 80 implémenté dans l'unité de débogage 28, destiné à recevoir les données dupliquées grâce aux modules de duplication précités et au moins une partie des données issues de l'ensemble 46 des registres généraux, et configuré pour concaténer toutes ces données,
- une mémoire tampon locale 82 implémentée dans l'unité de débogage 28, destinée à recevoir les données concaténées par le module de surveillance 80, et
- un port de sortie 84 implémenté dans l'unité de débogage 28, destiné à recevoir les données concaténées temporairement stockées en mémoire tampon 82 et à les transmettre à l'extérieur du microcontrôleur 10 pour analyse.

Le mode de réalisation détaillé ci-dessus en référence à la figure 2 est applicable de façon simple à un processeur de réveil asynchrone, ou plus généralement à tout coeur de processeur asynchrone, dont les cycles d'instructions se suivent sans se superposer temporellement. Un cycle d'instruction est constitué de l'ensemble des trois étapes successives consistant à charger une instruction (opération exécutée par l'unité de chargement 56), décoder l'instruction (opération exécutée par le décodeur 64) et exécuter l'instruction (opération exécutée par les unités fonctionnelles d'exécution 52, 54, 58, 60, 62).

Un coeur de processeur asynchrone perfectionné peut fonctionner en mode pipeline selon lequel l'exécution d'une n-ième instruction par les unités fonctionnelles d'exécution est réalisée en même temps que le décodage d'une (n+1)-ième instruction par le décodeur 64 et en même temps également que le chargement d'une (n+2)-ième instruction par l'unité de chargement 56. Dans ce mode de fonctionnement en pipeline, il est nécessaire d'adapter légèrement l'architecture du processeur de réveil 16 pour pouvoir gérer correctement les consignes « C-stop » et « C-step ». C'est un exemple non limitatif d'une telle adaptation qui va maintenant être décrit en référence à la figure 3.

Sur cette figure, un module 86 de gestion d'occupation s'interpose entre le module 48 de contrôle d'exécution, d'une part, et les unités fonctionnelles d'exécution 52, 54, 58, 60, 62 ainsi que le décodeur 64, d'autre part. Il reçoit des signaux d'indication d'occupation de la part des unités fonctionnelles d'exécution 52, 54, 58, 60, 62 et du décodeur 64. Lorsqu'une consigne « C-stop » ou « C-step » doit être prise en compte par le module 48 de contrôle d'exécution (cette consigne portant la référence générale « cons » sur la figure 3), il la transmet au module 86 de gestion d'occupation et attend un signal d'acquittement « ack » avant de l'appliquer. Ce signal d'acquittement « ack » n'est retourné par le module 86 de gestion d'occupation que lorsque tous les signaux d'indication d'occupation des unités fonctionnelles d'exécution 52, 54, 58, 60, 62 et du décodeur 64 indiquent qu'elles ne sont pas occupées. Ainsi, grâce à cette petite adaptation, il est possible de mettre en oeuvre les principes de l'invention de façon simple dans le processeur de réveil 16.

Il apparaît clairement qu'un microcontrôleur à coeur de processeur asynchrone tel que celui décrit précédemment permet d'envisager un large développement de son utilisation pour noeuds de capteurs communicants, puisqu'il exploite les avantages des coeurs de processeurs asynchrones tout en assurant simplement et à moindre coût en termes d'architecture le contrôle de leur exécution par un programmeur, permettant notamment de procéder à du débogage sur puce de façon transparente pour l'utilisateur.

On notera par ailleurs que l'invention n'est pas limitée aux modes de réalisation décrits précédemment.

Par exemple l'architecture du processeur de réveil 16 peut se décliner de différentes façons. En particulier, le module 48 de contrôle d'exécution pourrait être intégré au décodeur 64.

Il apparaîtra plus généralement à l'homme de l'art que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description.

## Revendications

1. Coeur de processeur asynchrone (16), c'est-à-dire non cadencé par un signal d'horloge, configuré pour l'exécution séquentielle d'instructions sur réception de signaux de commande d'interruption, comportant :
- une unité (56) de chargement séquentiel de lignes d'instructions depuis une mémoire principale (26) externe au coeur de processeur (16),
- un décodeur (64) de lignes d'instructions chargées par l'unité de chargement (56) en instructions exécutables,
- des unités fonctionnelles (52, 54, 58, 60, 62) d'exécution des instructions exécutables, et
- un module (48) de contrôle d'exécution configuré en automate (74) à deux états :
• un état de sommeil (S1) dans lequel le coeur de processeur asynchrone (16) est en attente d'un signal de commande d'interruption pour l'exécution d'une routine d'interruption, et
• un état d'exécution (S2) dans lequel le décodeur (64) est en attente d'une nouvelle ligne d'instruction de routine d'interruption en cours d'exécution à décoder,
**caractérisé en ce que** le module (48) de contrôle d'exécution gère en outre une variable d'état (status) de l'unité de chargement (56) pour sélectivement autoriser ou empêcher, en fonction au moins de la valeur de cette variable d'état (status), le chargement d'une nouvelle ligne d'instruction par l'unité de chargement (56) lorsque le module (48) de contrôle d'exécution est dans son état d'exécution (S2) et qu'il reste encore au moins une nouvelle ligne d'instruction de routine d'interruption en cours d'exécution à charger, et **en ce que** le module (48) de contrôle d'exécution est conçu pour consulter la valeur de cette variable d'état (status) avant de décider l'envoi ou non d'un signal (continue) d'autorisation de chargement d'une nouvelle ligne d'instruction à l'unité de chargement (56), sachant que cette dernière est configurée pour ne pas requérir le chargement d'une nouvelle ligne d'instruction de routine d'exécution tant qu'un tel signal d'autorisation (continue) n'a pas été émis par le module (48) de contrôle d'exécution.

2. Coeur de processeur asynchrone (16) selon la revendication 1, dans lequel le module (48) de contrôle d'exécution est configuré pour :
- passer à l'état d'exécution (S2) sur réception, par le coeur de processeur (16), d'un signal de commande d'interruption pour l'exécution d'une routine d'interruption, et autoriser le chargement d'une première ligne d'instruction de cette routine d'interruption à cette occasion, et
- passer de l'état d'exécution (S2) à l'état de sommeil (S1) après réception, par le coeur de processeur (16), d'une dernière ligne d'instruction de routine d'interruption.

3. Coeur de processeur asynchrone (16) selon la revendication 1 ou 2, dans lequel le module (48) de contrôle d'exécution est configuré pour, sur réception d'une nouvelle ligne d'instruction chargée depuis la mémoire principale externe (26) lorsqu'il est dans l'état d'exécution (S2) :
- déterminer s'il s'agit d'une ligne d'instruction requérant une suspension de routine d'interruption, puis
- s'il s'agit d'une ligne d'instruction requérant une suspension de routine d'interruption, empêcher le chargement d'une nouvelle ligne d'instruction depuis la mémoire principale externe (26), ou
- sinon, sélectivement autoriser ou empêcher le chargement d'une nouvelle ligne d'instruction depuis la mémoire principale externe (26) en fonction uniquement de la valeur de la variable d'état (status) de l'unité de chargement (56).

4. Coeur de processeur asynchrone (16) selon l'une quelconque des revendications 1 à 3, dans lequel l'état de sommeil (S1) ou d'exécution (S2) ainsi que la valeur de la variable d'état (status) de l'unité de chargement (56) pour autoriser ou empêcher le chargement d'une nouvelle ligne d'instruction sont des données d'informations stockées dans des registres d'états respectifs (76) du coeur de processeur (16) auxquels le module (48) de contrôle d'exécution a accès en lecture et/ou en écriture.

5. Coeur de processeur asynchrone (16) selon l'une quelconque des revendications 1 à 4, incluant des moyens (76) de réception et de stockage de consignes de débogage.

6. Coeur de processeur asynchrone (16) selon la revendication 5, dans lequel les moyens (76) de réception et de stockage incluent des registres de commande (CMD) accessibles en lecture par le module (48) de contrôle d'exécution et prévus pour l'enregistrement, par une unité de débogage (28) extérieure au coeur de processeur (16) ayant accès en écriture à ces registres de commandes (CMD), des consignes de débogage.

7. Coeur de processeur asynchrone (16) selon la revendication 5 ou 6, dans lequel les consignes de débogage comportent :
- une consigne de suspension de routine d'interruption en cours d'exécution,
- une consigne de redémarrage de routine d'interruption suspendue,
- une consigne d'exécution d'une seule ligne d'instruction de routine
d'interruption,
et dans lequel le module (48) de contrôle d'exécution est configuré pour, sur prise en compte de chaque consigne de débogage :
- mettre à jour la valeur de la variable d'état (status) de l'unité de chargement (56) pour empêcher le chargement d'une nouvelle ligne d'instruction lorsqu'il s'agit d'une consigne de suspension de routine d'interruption,
- autoriser le chargement d'une nouvelle ligne d'instruction et mettre à jour la valeur de la variable d'état (status) de l'unité de chargement (56) pour autoriser le chargement d'une nouvelle ligne d'instruction suivante lorsqu'il s'agit d'une consigne de redémarrage de routine d'interruption,
- autoriser le chargement d'une nouvelle ligne d'instruction lorsqu'il s'agit d'une consigne d'exécution d'une seule ligne d'instruction de routine d'interruption.

8. Microcontrôleur (10) pour noeud de capteur communicant, présentant une architecture comprenant :
- une première partie (12) comportant un processeur de réveil (16) activable sur réception de signaux de commande d'interruption,
- une deuxième partie (14) comportant un processeur principal (18)
activable uniquement sur sollicitation du processeur de réveil (16), dans lequel :
- le processeur de réveil (16) comporte au moins un coeur de processeur asynchrone selon l'une quelconque des revendications 1 à 7, incluant des unités fonctionnelles (52, 54, 58, 60, 52) adaptées pour des échanges de données entre le microcontrôleur (10) et au moins un périphérique, pour une gestion d'un protocole de réveil, ainsi que pour une gestion de fréquences et puissances de fonctionnement de composants de noeud de capteur communicant, et
- le processeur principal (18) comporte des unités fonctionnelles supplémentaires d'exécution de calculs complexes non réalisés par le processeur de réveil (16).

9. Microcontrôleur selon la revendication 8, comportant une unité de débogage (28) dans sa première partie (12), cette unité de débogage (28) ayant accès au processeur de réveil (16), via un bus asynchrone (30) de transmission de données, pour l'envoi de consignes de débogage.

10. Microcontrôleur (10) selon la revendication 8 ou 9, comportant une mémoire principale (26) dans sa première partie (12), cette mémoire principale (26) comportant des lignes d'instructions d'au moins une routine d'interruption (42₁, ..., 42ₙ) et étant accessible par le processeur de réveil (16), via un bus asynchrone (30) de transmission de données, pour le chargement séquentiel de lignes d'instructions.

## Patentansprüche

1. Asynchroner, das heißt nicht durch ein Taktsignal getakteter, Prozessorkern (16), der für die sequenzielle Ausführung von Befehlen bei Empfang von Unterbrechungs-Steuersignalen konfiguriert ist, umfassend:
- eine Einheit (56) für das sequenzielle Laden von Befehlszeilen aus einem Hauptspeicher (26) außerhalb des Prozessorkerns (16),
- einen Decoder (64) der von der Ladeeinheit (56) geladenen Befehlszeilen in ausführbare Befehle,
- Funktionseinheiten (52, 54, 58, 60, 62) zur Ausführung der ausführbaren Befehle, und
- ein Modul (48) zur Kontrolle der Ausführung, das als Automat (74) mit zwei Zuständen konfiguriert ist:
• einen Schlafzustand (S1), in dem der asynchrone Prozessorkern (16) auf ein Unterbrechungs-Steuersignal wartet, um eine Unterbrechungs-Routine auszuführen, und
• einen Ausführungszustand (S2), in dem der Decoder (64) auf eine neue Befehlszeile der Unterbrechungsroutine wartet, die gerade ausgeführt wird und decodiert werden soll,
**dadurch gekennzeichnet, dass** das Modul (48) zur Kontrolle der Ausführung darüber hinaus eine Statusvariable (status) der Ladeeinheit (56) verwaltet, um selektiv, zumindest in Abhängigkeit von dem Wert dieser Statusvariable (status), das Laden einer neuen Befehlszeile durch die Ladeeinheit (56) zuzulassen oder zu verhindern, wenn sich das Modul (48) zur Kontrolle der Ausführung in seinem Ausführungszustand (S2) befindet und noch mindestens eine neue Befehlszeile der laufenden Unterbrechungsroutine zum Laden verbleibt, und dass das Modul (48) zur Kontrolle der Ausführung so ausgelegt ist, dass es den Wert dieser Statusvariablen (status) abfragt, bevor es entscheidet, ob es ein Signal (continue) zur Genehmigung des Ladens einer neuen Befehlszeile an die Ladeeinheit (56) sendet, wobei letztere so konfiguriert ist, dass sie das Laden einer neuen Befehlszeile der Ausführungsroutine nicht anfordert, bis ein solches Signal (continue) zur Genehmigung von dem Modul (48) zur Kontrolle der Ausführung gesendet wurde.

2. Asynchroner Prozessorkern (16) nach Anspruch 1, wobei das Modul (48) zur Kontrolle der Ausführung dazu konfiguriert ist, um:
- in den Ausführungszustand (S2) zu wechseln, wenn der Prozessorkern (16) ein Unterbrechungs-Steuersignal empfängt, und bei dieser Gelegenheit das Laden einer ersten Befehlszeile dieser Unterbrechungsroutine zuzulassen, und
- von dem Ausführungszustand (S2) in den Schlafzustand (S1) zu wechseln, nachdem der Prozessorkern (16) eine letzte Befehlszeile der Unterbrechungsroutine empfangen hat.

3. Asynchroner Prozessorkern (16) nach Anspruch 1 oder 2, wobei das Modul (48) zur Kontrolle der Ausführung so konfiguriert ist, dass es bei Empfang einer neuen Befehlszeile, die aus dem externen Hauptspeicher (26) geladen wird, wenn es sich im Ausführungszustand (S2) befindet:
- feststellen, ob es sich um eine Befehlszeile handelt, die eine Unterbrechungsroutine erfordert, im Anschluss
- falls es sich um eine Befehlszeile handelt, die eine Aussetzung der Unterbrechungsroutine erfordert, das Laden einer neuen Befehlszeile aus dem externen Hauptspeicher (26) verhindern, oder
- andernfalls selektiv das Laden einer neuen Befehlszeile aus dem externen Hauptspeicher (26) nur in Abhängigkeit von dem Wert der Statusvariablen (status) der Ladeeinheit (56) zulassen oder verhindern.

4. Asynchroner Prozessorkern (16) nach einem der Ansprüche 1 bis 3, wobei der Schlafzustand (S1) oder der Ausführungszustand (S2) sowie der Wert der Statusvariablen (status) der Ladeeinheit (56) zum Zulassen oder Verhindern des Ladens einer neuen Befehlszeile Informationsdaten sind, die in jeweiligen Statusregistern (76) des Prozessorkerns (16) gespeichert sind, auf die das Modul (48) zur Kontrolle der Ausführung lesend und/oder schreibend Zugriff hat.

5. Asynchroner Prozessorkern (16) nach einem der Ansprüche 1 bis 4, einschließlich Mitteln (76) zum Empfang und zur Speicherung von Debugging-Sollwerten.

6. Asynchroner Prozessorkern (16) nach Anspruch 5, wobei die Mittel (76) zum Empfang und zur Speicherung Befehlsregister (CMD) umfassen, auf die das Modul (48) zur Kontrolle der Ausführung lesend zugreifen kann und die vorgesehen sind, um durch eine Debugging-Einheit (28) außerhalb des Prozessorkerns (16), die Schreibzugriff auf diese Befehlsregister (CMD) hat, Debugging-Anweisungen zu registrieren.

7. Asynchroner Prozessorkern (16) nach Anspruch 5 oder 6, wobei die Debugging-Sollwerte Folgendes umfassen:
- eine Anweisung zur Aussetzung der Unterbrechungsroutine während der Ausführung,
- eine Anweisung zum Neustarten der ausgesetzten Unterbrechungsroutine,
- eine Anweisung zur Ausführung einer einzelnen Befehlszeile der Unterbrechungsroutine,
und wobei das Modul (48) zur Kontrolle der Ausführung, nach Berücksichtigung jeder Debugging-Anweisung, so konfiguriert ist, um:
- den Wert der Statusvariablen (status) der Ladeeinheit (56) zu aktualisieren, um das Laden einer neuen Befehlszeile zu verhindern, wenn es sich um eine Anweisung zur Aussetzung einer Unterbrechungsroutine handelt,
- das Laden einer neuen Befehlszeile zuzulassen und den Wert der Statusvariablen (status) der Ladeeinheit (56) zu aktualisieren, um das Laden einer nächsten neuen Befehlszeile zuzulassen, wenn es sich um eine Anweisung zum Neustarten einer Unterbrechungsroutine handelt,
- das Laden einer neuen Befehlszeile zuzulassen, wenn es sich um eine Ausführungsanweisung für eine einzelne Zeile einer Unterbrechungsroutine handelt.

8. Mikrocontroller (10) für einen kommunizierenden Sensorknoten, der eine Architektur aufweist, die Folgendes umfasst:
- einen ersten Teil (12) umfassend einen Weckprozessor (16), der bei Empfang von Unterbrechungs-Steuersignalen aktiviert werden kann,
- einen zweiten Teil (14) umfassend einen Hauptprozessor (18), der nur auf Anforderung des Weckprozessors (16) aktiviert werden kann,
wobei:
- der Weckprozessor (16) mindestens einen asynchronen Prozessorkern nach einem der Ansprüche 1 bis 7 umfasst, der Funktionseinheiten (52, 54, 58, 60, 52) einschließt, die für den Datenaustausch zwischen dem Mikrocontroller (10) und mindestens einem Peripheriegerät, für eine Verwaltung eines Weckprotokolls sowie für eine Verwaltung von Frequenzen und Betriebsleistungen von Komponenten eines kommunizierenden Sensorknotens geeignet sind, und
- der Hauptprozessor (18) zusätzliche Funktionseinheiten zur Durchführung komplexer Berechnungen umfasst, die nicht vom Weckprozessor (16) durchgeführt werden.

9. Mikrocontroller nach Anspruch 8 umfassend eine Debugging-Einheit (28) in seinem ersten Teil (12), wobei diese Debugging-Einheit (28) über einen asynchronen Datenübertragungsbus (30) Zugriff auf den Weckprozessor (16) hat, um Debugging-Anweisungen zu senden.

10. Mikrocontroller (10) nach Anspruch 8 oder 9, umfassend einen Hauptspeicher (26) in seinem ersten Teil (12), wobei dieser Hauptspeicher (26) Befehlszeilen mindestens einer Unterbrechungsroutine (42₁, ..., 42ₙ) umfasst und über einen asynchronen Datenübertragungsbus (30) für das sequenzielle Laden von Befehlszeilen durch den Weckprozessor (16) zugänglich ist.

## Claims

1. An asynchronous processor core (16), i.e., not cadenced by a clock signal, configured for the sequential execution of instructions upon receipt of interrupt control signals, comprising:
- a loading unit (56) for a sequential loading of instruction lines from a main memory (26) which is external to the processor core (16),
- a decoder (64) for decoding instruction lines loaded by the loading unit (56) into executable instructions,
- functional units (52, 54, 58, 60, 62) for executing the executable instructions, and
- an execution control module (48) configured into a two-state automaton (74):
• a sleep state (S1) wherein the asynchronous processor core (16) awaits an interrupt control signal to execute an interrupt routine, and
• an execution state (S2) wherein the decoder (64) awaits a new instruction line from an interrupt routine that is being executed to be decoded,
**characterised in that** the execution control module (48) further manages a state variable (status) of the loading unit (56) to selectively authorize or prevent, according to at least the value of this state variable (status), the loading of a new instruction line by the loading unit (56) when the execution control module (48) is in its execution state (S2) and when at least one new instruction line of an interrupt routine that is being executed still remains to be loaded, and **in that** the execution control module (48) is designed for consulting the value of this state variable (status) before deciding whether or not to send a signal (continue) authorising the loading of a new instruction line to the loading unit (56), the latter being configured not to request the loading of a new execution routine instruction line until such an authorisation signal (continue) has not been sent by the execution control module (48).

2. The asynchronous processor core (16) as claimed in claim 1, wherein the execution control module (48) is configured to:
- go to the execution state (S2) upon receipt, by the processor core (16), of an interrupt control signal to execute an interrupt routine, and to authorize the loading of a first instruction line of this interrupt routine on this occasion, and
- go from the execution state (S2) to the sleep state (S1) after receipt, by the processor core (16), of a last interrupt routine instruction line.

3. The asynchronous processor core (16) as claimed in claim 1 or 2, wherein the execution control module (48) is configured to, upon receipt of a new instruction line loaded from the main external memory (26) when it is in the execution state (S2):
- determine if it is about an instruction line requiring a suspension of interrupt routine, then
- if it is about an instruction line requiring a suspension of interrupt routine, prevent the loading of a new instruction line from the main external memory (26), or
- otherwise, selectively authorize or prevent the loading of a new instruction line from the main external memory (26) only according to the value of the state variable (status) of the loading unit (56).

4. The asynchronous processor core (16) as claimed in any one of claims 1 to 3, wherein the sleep state (S1) or execution state (S2) as well as the value of the state variable (status) of the loading unit (56) to authorize or prevent the loading of a new instruction line is information data stored in respective status registers (76) of the processor core (16) to which the execution control module (48) has reading and/or writing access.

5. The asynchronous processor core (16) as claimed in any one of claims 1 to 4, including means (76) to receive and store debugging instructions.

6. The asynchronous processor core (16) as claimed in claim 5, wherein the receiving and storing means (76) include control registers (CMD) accessible to read by the execution control module (48) and provided for the recording, by a debugging unit (28) outside of the processor core (16) having writing access to these control (CMD) registers, of the debugging instructions.

7. The asynchronous processor core (16) as claimed in claim 5 or 6, wherein the debugging instructions comprise:
- an instruction for suspending interrupt routine in the process of execution,
- an instruction to restart suspended interrupt routine,
- an instruction to execute one single interrupt routine instruction line, and wherein the execution control module (48) is configured to, in considering each debugging instruction:
- update the value of the state variable (status) of the loading unit (56) to prevent the loading of a new instruction line when it is about an interrupt routine suspension instruction,
- authorize the loading of a new instruction line and update the value of the state variable (status) of the loading unit (56) to authorize the loading of a new following instruction line when it is about an instruction to restart interrupt routine,
- authorize the loading of a new instruction line when it is about an instruction to execute one single interrupt routine instruction line.

8. A microcontroller (10) for a communicating sensor node, which has an architecture comprising:
- a first part (12) comprising a wake-up processor (16) that can be activated upon receipt of interrupt control signals,
- a second part (14) comprising a main processor (18) that can be
activated only when requested by the wake-up processor (16), wherein:
- the wake-up processor (16) comprises at least one asynchronous processor core as claimed in any one of the claims 1 to 7, including functional units (52, 54, 58, 60, 52) adapted for data exchanges between the microcontroller (10) and at least one peripheral, to manage a wake-up protocol, as well as to manage functioning frequencies and powers of communicating sensor node components, and
- the main processor (18) comprises additional functional units to execute complex calculations not made by the wake-up processor (16).

9. The microcontroller as claimed in claim 8, comprising a debugging unit (28) in its first part (12), this debugging unit (28) having access to the wake-up processor (16), via an asynchronous data transmission bus (30), for sending debugging instructions.

10. The microcontroller (10) as claimed in claim 8 or 9, comprising a main memory (26) in its first part (12), this main memory (26) comprising instruction lines of at least one interrupt routine (42₁, ..., 42ₙ) and being accessible by the wake-up processor (16), via an asynchronous data transmission bus (30), for a sequential loading of instruction lines.
